# EUROPÄISCHE PATENTSCHRIFT

(11) **EP 2 696 491 B1**
(45) Veröffentlichungstag und Bekanntmachung des Hinweises auf die Patenterteilung: **27.04.2016**
(21) Anmeldenummer: 13003881.3
(22) Anmeldetag: 03.08.2013
(51) Int. Cl.: H02M 7/00, H01R 4/48, H01R 12/70, H01R 25/14

(54) **Antriebssystem mit Antriebsreglern**
Drive system with drive controllers
Système d'entraînement doté de régulateurs d'entraînement

(30) Priorität: 06.08.2012 DE 102012015864
(43) Veröffentlichungstag der Anmeldung: 12.02.2014
(73) Patentinhaber: STÖBER ANTRIEBSTECHNIK GmbH & Co., D-75177 Pforzheim (DE)
(72) Erfinder: Bauer, Michael, 75328 Schömberg (DE); Vetter, Martin, 77815 Bühl (DE); Scholze, Stephan, 75305 Neuenbürg (DE)
(74) Vertreter: Kohl, Karl-Heinz

(56) Entgegenhaltungen:
- DE-C1- 4 235 444
- DE-T2- 69 209 093
- DE-U- 1 821 753

## Beschreibung

Die Erfindung betrifft ein Antriebssystem mit Antriebsreglern nach dem Oberbegriff des Anspruches 1.

Es ist bekannt, Antriebsregler, vorzugsweise Umrichter, beispielsweise in einem Schaltschrank unterzubringen. Die Antriebsregler werden an der Schaltschrankrückwand bzw. einer Montageplatte befestigt Um die einzelnen Antriebsregler mit dem notwendigen Strom zu versorgen, sind die nebeneinander angeordneten Antriebsregler durch Stecker miteinander gekoppelt- Jeder einzelne Stecker muss so ausgelegt sein, dass er die maximale mögliche Stromaufnahme des gesamten Antriebssystems übertragen kann. Ist beispielsweise jeder Antriebsregler auf eine Stromaufnahme von 10 A ausgelegt und besteht das Antriebssystem aus zehn in einer Reihe hintereinander angeordneten Antriebsreglern, dann müssen die Stecker auf die Stromzuführung von 100 A ausgelegt sein. Solche Stecker sind jedoch groß und unhandlich, so dass ein Kompromiss bei der Auslegung des Antriebssystems eingegangen wird, indem die Stecker auf eine geringere Stromaufnahme hin ausgelegt sind. Dadurch ergeben sich allerdings Einschränkungen in der Anwendung des Antriebssystems.

Es sind auch Antriebssysteme bekannt, bei denen benachbarte Antriebsregler über Schienenstücke miteinander verbunden sind. Sie werden mit Schrauben gegen Kontaktierungen im jeweiligen Antriebsregler gepresst. Für diese Schrauben sind die Schienenstücke mit randoffenen Schlitzen versehen, damit sie unter die vormontierten Schraubenköpfe geschoben werden können. Durch diese Schlitze wird allerdings die maximal übertragbare Strommenge begrenzt, so dass die Schienenstücke nur dort eingesetzt werden, wo kleinere Ströme erforderlich sind.

Aus der DE 692 09 093 T2 ist eine modulare Wechselstromantriebssteuereinrichtung bekannt, die mehrere nebeneinander angeordnete Wechselrichtermodule aufweist, welche über zwei Stromschienen mit Strom versorgt werden. Jedes Wechselrichtermodul enthält eine Rückwand mit einem Paar senkrecht verlaufender Stromschienen, die eine Steuerelektrodentreiberschaltung mit Strom versorgen. Die Stromschienen sind über Anschlussfahnen mit Gleichspannungsschienen verbunden, die sich über sämtliche Wechselrichtermodule erstrecken und mit einem Trägerbauteil der Wechselstromantriebssteuereinrichtung verschraubt sind. Die Anschlussfahnen sind auf die Gleichspannungsschienen aufgeschraubt.

Die Stromversorgung der Steuerelektrodentreiberschaltung erfolgt über die Gleichspannungsschienen, die Anschlussfahnen, die Stromschienen, über Transistoren und Leiter. Die Gleichspannungsschienen, welche mehrere Wechselrichtermodule überbrücken, sind an ein Trägerbauteil angeschraubt und zusätzlich mit einer Verschraubung zur Befestigung der Anschlussfahnen versehen. Insgesamt ergibt sich hierdurch eine aufwändige Stromübertragung von den Gleichspannungsschienen bis zur Steuerelektrodentreiberschaltung. Nachteilig ist außerdem die Befestigung der Gleichspannungsschienen und der Anschlussfahnen mit Schrauben, weil dadurch der Querschnitt und dementsprechend auch das Stromübertragungsverhalten der Gleichspannungsschienen und der Anschlussfahnen beeinflusst wird.

Die DE 18 21 753 U betrifft ein Verzweigungselement für Stromschienen. Das Verzweigungselement weist ein Rohrstück auf, in dem mehrere Schienen zur Stromübertragung angeordnet sind, die stirnseitig Klemmen zur Verbindung mit weiteren Schienen aufweisen. Die Schienen sind über einen quer verlaufenden Bolzen, welcher durch die Schienen hindurchgeführt ist, in dem Rohrstück fixiert.

Die DE 42 35 444 C1 zeigt eine Anschluss- und Verbindungsklemme für Sammelschienen. Die Klemme weist ein Klemmengehäuse mit zwei klammerförmigen Klemmenschenkeln auf, die die Sammelschiene übergreifen. Die Klemmenschenkel werden von einer Spannfeder radial von außen nach innen gegen die Sammelschiene gepresst.

Der Erfindung liegt die Aufgabe zugrunde, das gattungsgemäße Antriebssystem so auszubilden, dass in konstruktiv einfacher Weise hohe Ströme übertragen werden können.

Diese Aufgabe wird beim gattungsgemäßen Antriebssystem erfindungsgemäß mit den kennzeichnenden Merkmalen des Anspruches 1 gelöst.

Das erfindungsgemäße Antriebssystem zeichnet sich dadurch aus, dass zur Stromübertragung eine Stromschiene eingesetzt wird, die sich zumindest über einen Teil der Länge der nebeneinander angeordneten Antriebsregler erstreckt. Die Stromschiene kann so lang sein, dass mit ihr sämtliche nebeneinander angeordneten Antriebsregler mit dem notwendigen Strom versorgt werden können. Mit der Stromschiene können hohe Ströme problemlos übertragen werden. Die Stromschiene ist ein preisgünstiges Bauteil, das einfach montiert werden kann. Die Stromschiene erstreckt sich über die Antriebsregler, die untereinander für unterschiedlich hohe Stromaufnahmen vorgesehen sein können. Über die Stromschiene kann die gesamte Strommenge des Antriebssystems übertragen werden, so dass jeder Antriebsregler seinen maximalen Strom erhält, wenn er ihn benötigt. Da die Stromschiene unter Federkraft an der Kontaktierung einer Trägerleitplatte des jeweiligen Antriebsreglers anliegt, ergibt sich eine einfache und zuverlässige Kontaktierung.

Die Stromschiene hat vorteilhaft eckigen, vorzugsweise rechteckigen Querschnitt. Solche Stromschienen sind Standardbauteile, die kostengünstig sind und in unterschiedlichsten Längen zur Verfügung stehen. Die Länge der Stromschiene lässt sich daher sehr einfach an die Länge der nebeneinander angeordneten Antriebsregler anpassen. Es ist möglich, dass der Installateur vor Ort die Stromschiene auf die richtige Länge absägt.

Um eine optimale Stromübertragung zu gewährleisten, ist es vorteilhaft, wenn die Stromschiene über ihre Länge konstanten Querschnitt aufweist.

Die Kontaktierung erfolgt vorteilhaft durch Federklammern, die auf die Trägerleitplatten der Antriebsregler gesteckt werden. Je nach Ausbildung des Antriebsreglers ist es ausreichend, wenn für jede Kontaktierung eine Federklammer vorgesehen ist. Je nach Gestaltung der Kontaktierung können auch zwei oder mehr Federklammern eingesetzt werden. Die Federklammern ermöglichen eine einfache

Befestigung der Stromschiene an den Trägerleitplatten der Antriebsregler.

Bei einer vorteilhaften Ausbildung ist die Federklammer mit zwei Schenkeln versehen, die über elastische Biegeabschnitte in einen Klemmabschnitt übergehen, der unter elastischer Vorspannung auf der Stromschiene aufliegt. Über die elastischen Biegeabschnitte wird erreicht, dass der Klemmabschnitt fest gegen die Stromschiene gedrückt wird, wodurch diese unter ausreichend hohem Druck auf der Kontaktierung der Trägerleitplatte aufliegt. Die Biegeabschnitte stellen auch sicher, dass die zur sicheren Kontaktierung notwendige Federkraft über eine lange Einsatzdauer sichergestellt ist. Die elastischen Biegeabschnitte sind so ausgebildet, dass eine nachlassende Anpresskraft durch diese Biegeabschnitte ausgeglichen wird.

Das Antriebssystem kann so ausgebildet sein, dass die Stromführungselemente zwischen den einzelnen Antriebsreglern durch wenigstens ein Federelement gegen die Kontaktierung der Trägerleitplatte des jeweiligen Antriebsreglers gedrückt werden. Infolge des Einsatzes des Federelementes müssen die Stromführungselemente nicht mit Durchbrüchen für Befestigungs- bzw. Klemmschrauben versehen sein. Dadurch haben die Stromführungselemente über ihre Länge konstanten Querschnitt und können dadurch hohe Ströme zuverlässig übertragen.

Die Stromschiene kann auf jede geeignete Weise mit den Antriebsreglern verbunden werden. Eine besonders vorteilhafte Kontaktierung ergibt sich dann, wenn die Stromschiene unter Federkraft an der Kontaktierung einer Trägerleitplatte des jeweiligen Antriebsreglers anliegt.

In diesem Falle erfolgt die Kontaktierung vorteilhaft durch Federklammern, die auf die Trägerleitplatten der Antriebsregler gesteckt werden. Je nach Ausbildung des Antriebsreglers ist es ausreichend, wenn für jede Kontaktierung eine Federklammer vorgesehen ist. Je nach Gestaltung der Kontaktierung können auch zwei oder mehr Federklammern eingesetzt werden. Die Federklammern ermöglichen eine einfache Befestigung der Stromschiene an den Trägerleitplatten der Antriebsreglern.

Bei einer vorteilhaften Ausbildung ist die Federklammer mit zwei Schenkeln versehen, die über elastische Biegeabschnitte in einen Klemmabschnitt übergehen, der unter elastischer Vorspannung auf der Stromschiene aufliegt, Über die elastischen Biegeabschnitte wird erreicht, dass der Klemmabschnitt fest gegen die Stromschiene gedrückt wird, wodurch diese unter ausreichend hohem Druck auf der Kontaktierung der Trägerleitplatte aufliegt. Die Biegeabschnitte stellen auch sicher, dass die zur sicheren Kontaktierung notwendige Federkraft über eine lange Einsatzdauer sichergestellt ist. Die elastischen Biegeabschnitte sind so ausgebildet, dass eine nachlassende Anpresskraft durch diese Biegeabschnitte ausgeglichen wird.

Das Antriebssystem ist so ausgebildet, dass die Stromführungselemente zwischen den einzelnen Antriebsreglen durch wenigstens ein Federelement gegen die Kontaktierung der Trägerleitplatte des jeweiligen Antriebsreglers gedrückt werden. Infolge des Einsatzes des Federelementes müssen die Stromführungselemente nicht mit Durchbrüchen für Befestigungs- bzw. Klemmschrauben versehen sein. Dadurch haben die Stromführungselemente über ihre Länge konstanten Querschnitt und können dadurch hohe Ströme zuverlässig übertragen.

Das Stromführungselement hat vorteilhaft eckigen, vorzugsweise viereckigen Querschnitt.

Das Federelement ist vorteilhaft eine Federklammer, die auf die Trägerleitplatte gesteckt wird.

Die Federklammer weist vorteilhaft zwei Schenkel auf, die über elastische Biegeabschnitte in einen Klemmabschnitt übergehen, der unter elastischer Vorspannung auf dem Stromführungselement aufliegt. Die Federklammer umgreift das Stromführungselement quer zu dessen Längsrichtung. Die beiden Schenkel liegen hierbei vorteilhaft mit ausreichendem Abstand zu den Längsrändern des Stromführungselementes, so dass sich die Federklammer einfach auf die Trägerleitplatte aufstecken lässt. Die Biegeabschnitte erzeugen nach dem Aufstecken der Federklammer auf die Trägerleitplatte den erforderlichen Anpressdruck, den der Klemmabschnitt auf das Stromführungselement ausübt. Mit dem Klemmabschnitt wird das Stromführungselement mit dem erforderlichen Pressdruck gegen die Kontaktierung gedrückt. Die Biegeabschnitte stellen darüber hinaus sicher, dass über die Einsatzdauer des Antriebssystems ein ausreichender Anpressdruck sichergestellt ist. Bei einer nachlassenden Federspannung sorgen die Biegeabschnitte dafür, dass die Federkraft selbsttätig nachgestellt wird.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und den Zeichnungen.

Die Erfindung wird nachstehend anhand einiger in den Zeichnungen dargestellter Ausführungsformen näher erläutert. Es zeigen
- Fig. 1: in Draufsicht einen Teil eines erfindungsgemäßen Antriebssystems,
- Fig. 2: in vergrößerter Darstellung einen Kontaktbereich zwischen einem Stromführungselement und einer Trägerleiterplatte,
- Fig. 3: eine Verbindung von Antriebsreglern mit in zwei Richtungen sich erstreckender Stromführungselemente,
- Fig. 4 bis Fig. 7: in schematischer Darstellung verschiedene Ausführungsformen.

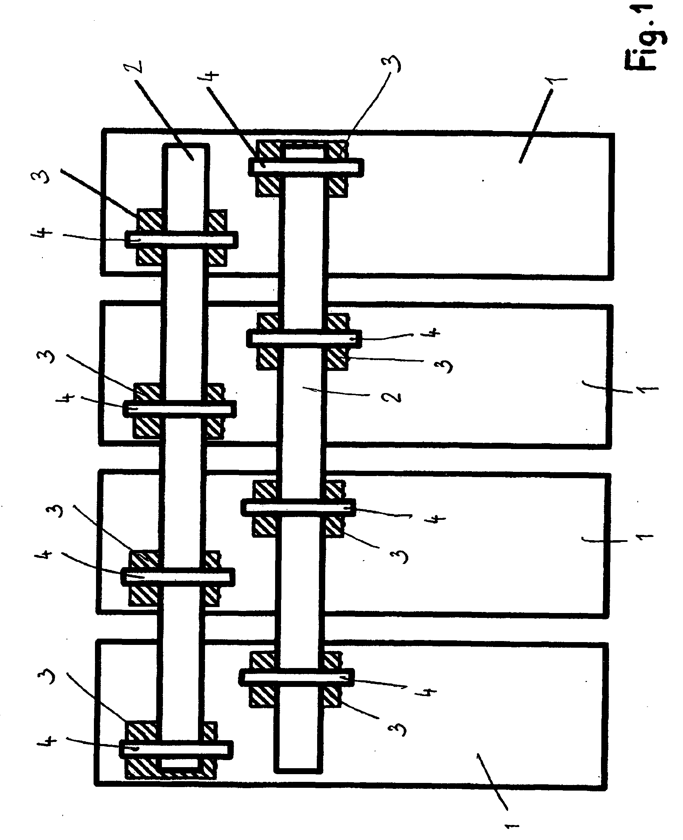

Im Folgenden werden Antriebssysteme beschrieben, die Antriebsregler aufweisen, die durch Stromführungselemente miteinander verbunden sind. Fig. 1 zeigt nebeneinander angeordnete Trägerleitplatten 1, die jeweils Teil eines Moduls sind. Auf die Module werden die Antriebsregler aufgesetzt, die bevorzugt Umrichter sind. Unter Antriebsreglern sind allgemein elektrische Geräte zu verstehen, die mit Strom versorgt werden müssen. Die Komponenten dieser Antriebsregler werden durch die auf der jeweiligen Trägerleitplatte 1 befindlichen elektrischen/elektronischen Bauteile betrieben. Zur Stromzuführung dienen Schienen 2, die so lang sind, dass mit ihnen alle Antriebsregler des Antriebssystems mit dem notwendigen Strom versorgt werden. Die Trägerleitplatten 1 haben Kontaktflächen 3, die in stromleitendem Kontakt mit den Schienen 2 sind. Über die Kontaktflächen 3 der Trägerleitplatten 1 wird der zur Versorgung der entsprechenden Antriebsregler benötigte Strom übertragen. Im Ausführungsbeispiel sind die Trägerleitplatten 1 durch zwei Schienen 2 miteinander verbunden. Die Trägerleitplatten 1 haben für die beiden Schienen 2 jeweils zwei Kontaktflächen 3.

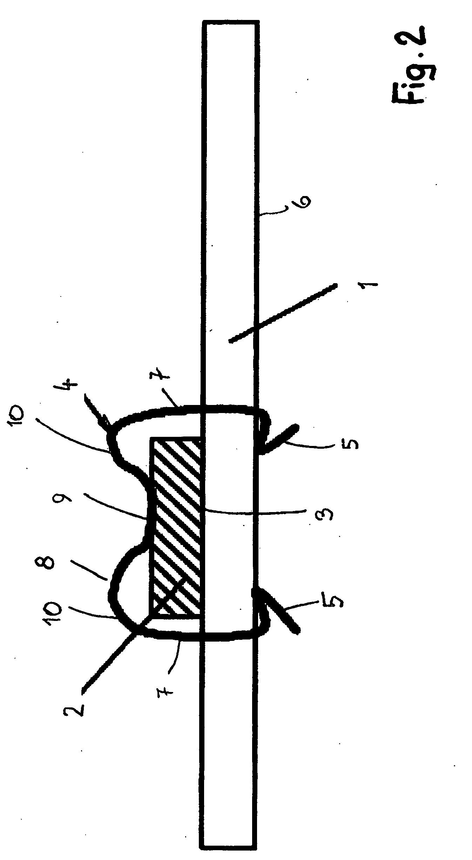

Um einen zuverlässigen Kontakt zwischen den Stromschienen 2 und den Kontaktflächen 3 zu gewährleisten, sind Federklammern 4 vorgesehen, mit denen der nötige Anpressdruck zwischen den Schienen und den Kontaktflächen 3 hergestellt wird. Im dargestellten Ausführungsbeispiel ist pro Kontaktfläche 3 jeweils eine Federklammer 4 vorgesehen. Je nach Größe der Kontaktfläche 3 können aber auch weitere Federklammern pro Kontaktfläche 3 vorgesehen sein. Die Federklammern 4 sind so ausgebildet, dass sie unter elastischer Vorspannung an der Trägerleitplatte 1 gehalten werden können. Hierzu haben die Federklammern 4 hakenförmige Enden 5 (Fig. 2), die an der von der Schiene 2 abgewandten Unterseite 6 der Trägerleitplatte 1 anliegen und an den freien Enden von Schenkeln 7 vorgesehen sind, die durch (nicht dargestellte) Öffnungen in der Trägerleitplatte 1 ragen. Die Schenkel 7 gehen in einen Steg 8 über, der einen mittleren Klemmabschnitt 9 aufweist, der in der Einbaulage der Federklammer 4 unter elastischer Vorspannung auf der Schiene 2 aufliegt und diese dadurch fest gegen die Kontaktfläche 3 drückt. Der Klemmabschnitt 9 steht gegenüber dem übrigen Teil des Steges 8 in Richtung auf die Schiene 2 vor. Diese übrigen Stegteile bilden Federabschnitte 10, die in der Einbaulage der Federklammer 4 elastisch verformt sind und dadurch den Klemmabschnitt 9 gegen die Schiene 2 drücken. Die Federklammern 4 erstrecken sich quer zur Längsrichtung der Schiene 2. Die beiden Schenkel 7 der Federklammer 4 liegen vorteilhaft mit Abstand neben den Längsseiten der Schiene 2, so dass die Federklammer 4 einfach auf die Trägerleitplatte 1 gesteckt werden kann.

Die Federklammern 4 lassen sich einfach an den Trägerleitplatten 1 befestigen. Die Federklammern 4 müssen lediglich mit ihren Schenkeln 7 durch die entsprechenden Öffnungen der Trägerleitplatten 1 gesteckt werden. Aufgrund der hakenförmigen Ausbildung der freien Schenkelenden 5 werden die Federklammern 4 in der Einbaulage zuverlässig gesichert.

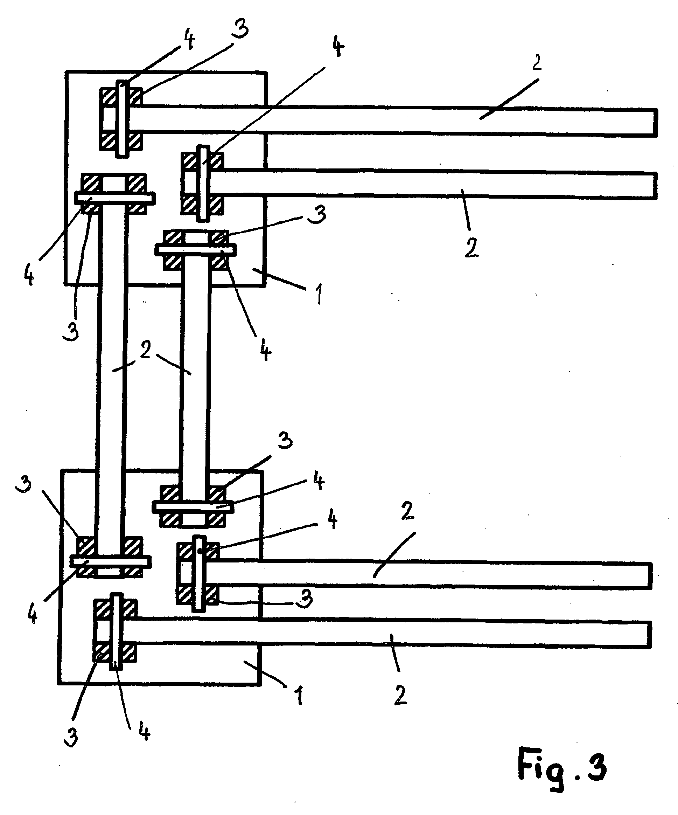

Bei der Ausführungsform gemäß Fig. 1 werden mit den Schienen 2 horizontal nebeneinander liegende Antriebsregler mit Strom versorgt. Fig. 3 zeigt beispielhaft die Möglichkeit, dass die Stromversorgung auch zwischen vertikal übereinander angeordneten Antriebsreglern mit Hilfe der Schienen 2 möglich ist. Beispielhaft sind zwei Trägerleitplatten 1 zugehörig zu zwei vertikal nebeneinander angeordneten Antriebsreglern dargestellt, die durch zwei vertikale Schienen 2 miteinander verbunden sind. Die Kontaktierung dieser Schienen 2 mit den entsprechenden Kontaktfläche 3 auf den beiden Trägerleitplatten 1 erfolgt mit Hilfe der Federklammern 4 in der beschriebenen Weise. An jede Trägerleitplatte 1 ist außerdem mit jeweils horizontalen Schienen 2 die Trägerleitplatte 1 des horizontal benachbarten Antriebsreglers angeschlossen. Die Trägerleitplatten 1 sind in diesem Fall jeweils mit vier Kontaktflächen 3 versehen.

Die beiden vertikal übereinander liegenden Trägerleitplatten 1 können als reine Stromverbinder dienen, die den Strom von der einen Reine von Antriebsreglern zur anderen Reihe von Antriebsreglern weiterleiten.

Die übereinander liegenden Trägerleitplatten 1 können auch Teile der beschriebenen Module sein, auf welche die entsprechenden Antriebsregler aufgesetzt werden.

Die horizontalen Schienen 2 sind wiederum so lang, dass an sie die vorgesehene Anzahl von Antriebsreglern angeschlossen werden kann. Die vertikalen Schienen 2 sind entsprechend kürzer, weil mit ihnen nur vertikal übereinander liegende Antriebsregler miteinander verbunden werden müssen.

Die beiden Trägerleitplatten 1 bilden eine Eckverbindung. Es ist auch möglich, die Trägerleitplatte 1 mit den Schienen 2 als T-Stück auszubilden, so dass die Verbindung zwischen den übereinander angeordneten Reihen von Antriebsreglern 11 nicht nur am Ende der Reihe, sondern auch innerhalb der Reihe möglich ist.

Die beschriebene horizontale und vertikale Anordnung der Antriebsregler bezieht sich auf die Darstellung gemäß den Fig. 1 und 3. Die Antriebsregler können im Einsatz selbstverständlich auch abweichend von der Horizontalen bzw. Vertikalen neben- bzw. übereinander angeordnet sein.

Zur Erzeugung des Anpressdruckes zwischen den Schienen 2 und den Kontaktflächen 3 können auch anders gestaltete Federelemente eingesetzt werden..Sie müssen nur so gestaltet sein, dass sie den für eine sichere Stromübertragung notwendigen Anpressdruck erzeugen.

Der Einsatz der Federelemente hat den Vorteil, dass die Schienen 2 über ihre Länge konstanten Querschnitt haben können und keine Durchstecköffnungen und dergleichen für Klemmschrauben und dergleichen benötigen. Dadurch steht der volle Querschnitt der Schienen 2 zur Stromübertragung zur Verfügung. Mit den Schienen 2 können darum auch hohe Ströme problemlos übertragen werden.

Die Schienen 2 sind preisgünstige Standardbauteile, die sich einfach montieren lassen. Die Schienen 2 bestehen vorteilhaft aus Kupfer, können aber auch aus anderen stromleitenden Materialien, wie etwa Aluminium, bestehen.

In den dargestellten Ausführungsbeispielen sind jeweils zwei stromführende Schienen 2 vorgesehen, so dass der Strom in beiden Richtungen zwischen den einzelnen Antriebsreglern übertragen werden kann.

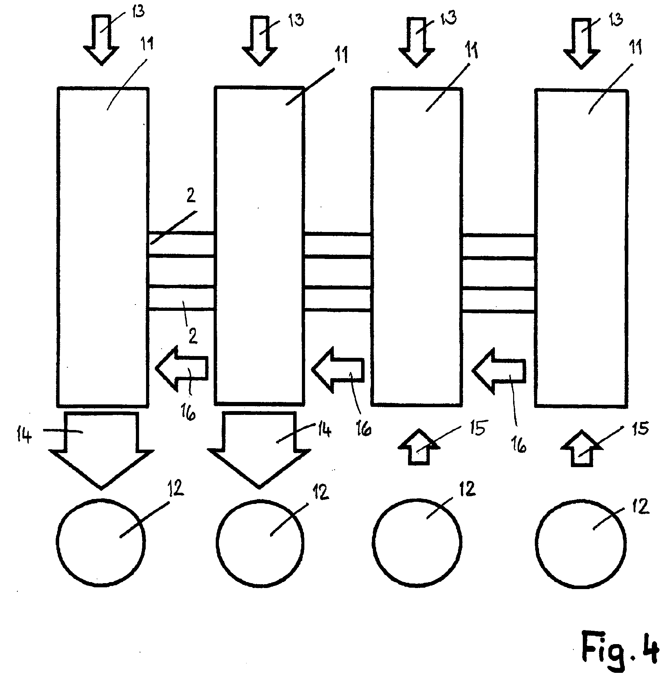

Fig. 4 zeigt beispielhaft ein Antriebssystem mit vier nebeneinander angeordneten Antriebsreglern 11, die vorzugsweise Umrichter sind und denen jeweils ein Motor 12 als Antrieb zugeordnet ist. Jeder Antriebsregler 11 ist mit einer eigenen Stromversorgung versehen und an das Stromnetz angeschlossen. Jeder einzelne Antriebsregler 11 wandelt den zugeführten Drehstrom in Gleichstrom um. Über die beiden stromführenden Schienen 2 kann der Strom vom einen zum anderen Antriebsregler 11 übertragen werden. Die beiden Schienen sind so lang, dass sie sich über vier Antriebsregler 11 erstrecken. Innerhalb der Trägerleitplatten-Module der Antriebsregler 11 sind die beiden Schienen 2 in der beschriebenen Weise mittels der Federklammern 4 mit den Kontaktflächen 3 der Trägerleitplatten 1 verbunden.

Die Pfeile 13 kennzeichnen den Anschluss der Antriebsregler 11 an das Drehstromnetz. Die beiden in Fig. 4 linken Antriebsregler 11 liefern den Strom an die Motoren 12 (Pfeile 14). Die in Fig. 4 rechten beiden Antriebsregler 11 erhalten von ihren Motoren 12 Strom (Pfeile 15). Die Stromübertragung zwischen den Antriebsreglern über die stromführenden Schienen 2 ist durch die Pfeile 16 angegeben.

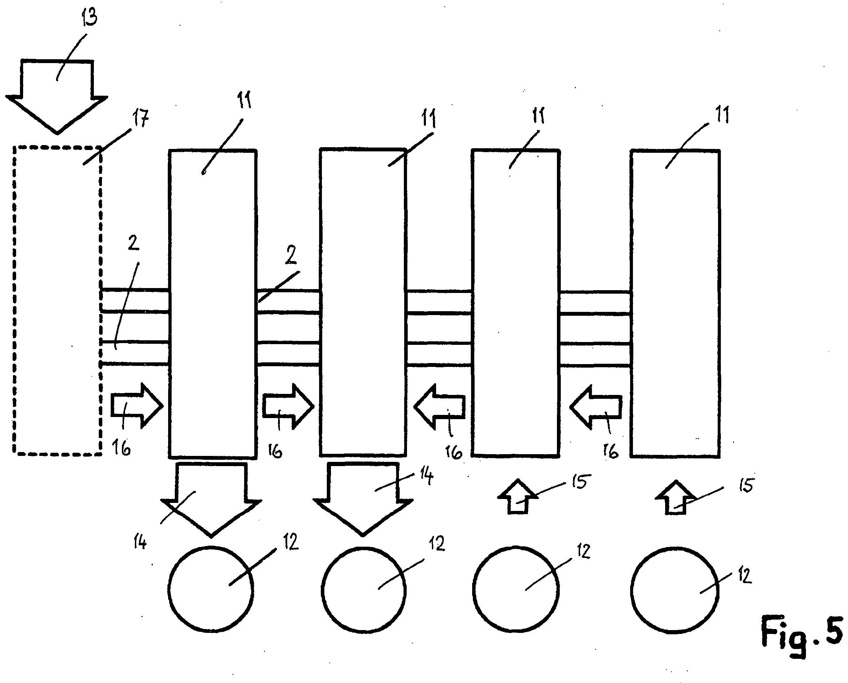

Fig. 5 zeigt ein Beispiel eines Antriebssystems, bei dem die Antriebsregler 11 an eine gemeinsame Versorgungseinheit 17 angeschlossen sind. Sie ist an das Stromnetz 13 angeschlossen und liefert über die stromführenden Schienen 2 den umgewandelten Gleichstrom den nachfolgenden Antriebsreglern 11. Die Schienen 2 sind wiederum so lang, dass über sie die Versorgungseinheit 17 sowie die nachfolgenden Trägerleitplatten-Module der Antriebsregler 11 in der anhand der Fig. 1 bis 3 beschriebenen Weise angeschlossen werden können.

Die Pfeile 14 bis 16 zeigen an, wie der Strom zwischen den einzelnen Bauteilen des Antriebssystems übertragen wird. Beispielhaft wird der Strom von der Versorgungseinheit 17 an die beiden nachfolgenden Antriebsregler 11 übertragen, während die in Fig. 5 bei den rechten Antriebsregler 11 nicht benötigten Strom an den benachbarten Antriebsregler 11 abgeben. Die Stromübertragungsrichtung wird durch die Pfeile angegeben.

Die Stromübertragung zwischen den einzelnen Antriebsreglern 11 kann selbstverständlich auch in anderer Weise erfolgen, abhängig von den jeweiligen Einsatzbedingungen des Antriebssystems.

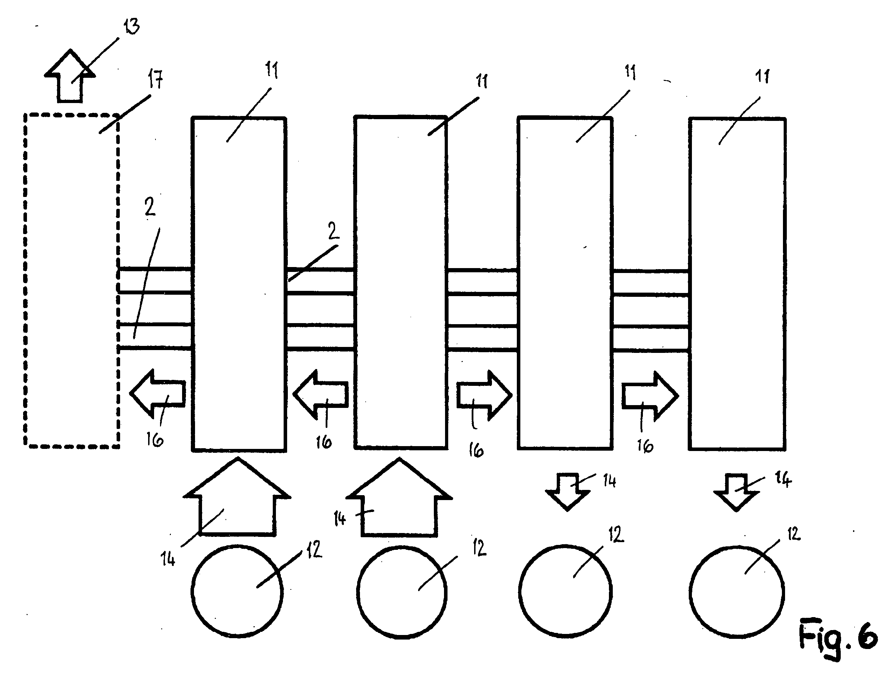

So zeigt Fig. 6 beispielhaft, dass der Stromverlauf zwischen den einzelnen Komponenten des Antriebssystems auch anders erfolgen kann. Die Motoren 12 der in Fig. 6 beiden linken Antriebsregler 11 liefern ausreichend Strom, so dass diese Antriebsregler 11 der Versorgungseinheit 17 diesen Strom teilweise zurückgeben können, so dass der überschüssige Strom in das Stromnetz zurückgeliefert werden kann. Auch die beiden rechten Antriebsregler 11 erhalten den benötigten Strom von den beiden anderen Antriebsreglern (Pfeile 16).

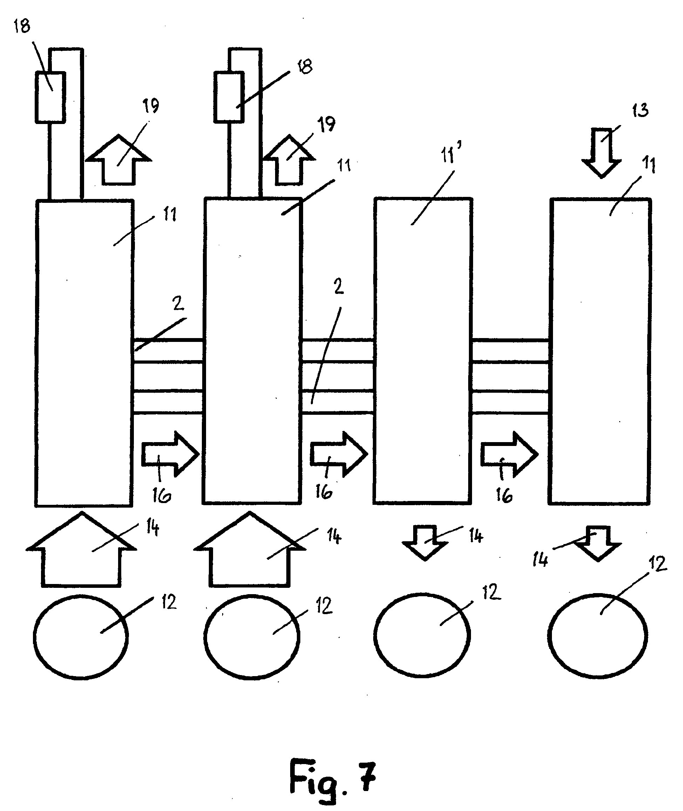

Fig. 7 zeigt beispielhaft den Fall, dass die Antriebsregler 11 mehr Strom erzeugen, als für die restlichen Antriebsregler benötigt wird. Der überschüssige Strom wird über Bremswiderstände 18 geführt, an denen der überschüssige Strom in Wärme umgewandelt wird. Beispielhaft liefern die Motoren 12 der beiden linken Antriebsregler 11 mehr Strom zurück, als für den Betrieb der Antriebsregler innerhalb des Antriebssystems erforderlich ist. Der überschüssige Strom (Pfeile 19) wird über die Bremswiderstände 18 geleitet. Der rechte Antriebsregler 11 bezieht seinen Strom aus dem Stromnetz, da dieses beispielhafte Antriebssystem keine zentrale Versorgungseinheit entsprechend den Fig. 5 und 6 aufweist. Die beiden linken Antriebsregler 11 erhalten beispielhaft so viel Strom von ihren Motoren 12, dass sie die beiden rechten Antriebsregler 11 mit Strom versorgen können. Im Beispielsfall reicht dieser Strom aus, den Antriebsregler 11' vollständig mit dem notwendigen Strom zu versorgen. Der rechte Antriebsregler 11 erhält zusätzlich einen Teil seines benötigten Stromes auch aus dem Netz 13.

Es wird darauf hingewiesen, dass die Größe der in den Fig. 4 bis 7 angegebenen Pfeile für die Stromzuführung ein Maß für die Größe des übertragenen Stromes in der jeweiligen Richtung ist. Selbstverständlich sind die Pfeilgrößen nicht maßstabsgetreu wiedergegeben.

Bei den beschriebenen Ausführungsbeispielen werden die durchgehenden stromführenden Schienen 2 eingesetzt, die sich über die Länge der nebeneinander angeordneten Antriebsregler 11 erstrecken. Mit solchen durchgehenden Schienen 2 können sehr hohe Ströme, zum Beispiel 200 A, problemlos übertragen werden. Die mit den Schienen 2 verbundenen Antriebsregler 11 können untereinander für unterschiedliche Stromaufnahmen ausgebildet sein. So kann beispielsweise einer der Antriebsregler 11 für eine Stromaufnahme von 5 A und ein anderer Antriebsregler für eine Stromaufnahme von beispielsweise 30 A ausgelegt sein. Über die durchgehenden Schienen 2 kann so viel Strom geführt werden, dass jeder Antriebsregler 11 innerhalb des Antriebssystems die für ihn vorgesehene maximale Strommenge erhalten kann. Die Schienen 2 sind bevorzugt mit den beschriebenen Federklammern 4 mit den Trägerleitplatten 1 verbunden. Diese vorteilhafte Verbindung ermöglicht eine einfache Montage des Antriebssystems. Für die beschriebene Stromübertragung können die durchgehenden Schienen 2 aber auch durch Schrauben und dergleichen mit den Trägerleitplatten 1 verbunden sein. Auch mit Hilfe einer solchen Verbindung kann jedem Antriebsregler 11 die für ihn vorgesehene maximale Strommenge zugeführt werden. Der Querschnitt der stromführenden Schienen 2 wird im Hinblick auf den maximal zu übertragenden Strom gewählt.

Die durchgehende stromführenden Schiene kann bei Antriebssystemen eingesetzt werden, die entsprechend dem Beispiel nach den Fig. 5 und 6 eine Versorgungseinheit 17 für die nachfolgenden Antriebsregler 11 aufweist, oder für Antriebssysteme, bei denen jeder Antriebsregler 11 an das Stromnetz angeschlossen ist (Fig. 4 und 7). Bei Antriebssystemen mit der wenigstens einen Versorgungseinheit 17 ist diese über einen ersten Anschluss an das Stromnetz angeschlossen. Ein zweiter Anschluss der Versorgungseinheit 17 wird durch die durchgehende Schiene 2 gebildet, über welche der Strom den nachfolgenden Antriebsreglern 11 zugeführt wird.

Bei Antriebssystemen ohne Versorgungseinheit 17 ist zumindest ein Antriebsregler 11 an das Stromnetz angeschlossen und hat eine eigene Stromversorgung, um aus dem Stromnetz entnommenen Drehstrom einen Gleichstrom für die jeweils anderen Antriebsregler 11 bereitzustellen. Vorteilhaft sind alle Antriebsregler 11 an das Stromnetz angeschlossen und haben jeweils eine eigene Stromversorgung. Die Antriebsregler 11 sind somit jeweils mit einem ersten Anschluss für die Anbindung an das Stromnetz und mit einem zweiten Anschluss versehen, der durch die jeweilige stromführende Schiene 2 gebildet ist.

Die Antriebsregler 11 des Antriebssystems arbeiten in bekannter Weise derart, dass einige von ihnen Strom verbrauchen, während andere Strom erzeugen. Dies ist in den Fig. 4 bis 7 beispielhaft durch die eingezeichneten Pfeile veranschaulicht. Wenn der Stromverbrauch höher ist als der von den stromerzeugenden Antriebsreglern 11 gelieferte Strom, wird der benötigte Stromrestbetrag über den ersten Anschluss dem Stromnetz entnommen. Da das Antriebssystem zwei stromführende Schienen 2 aufweist, kann der Strom in beiden Richtungen zwischen den Antriebsreglern 11 übertragen werden.

Auch bei Antriebssystemen mit einer eigenen Versorgungseinheit 17 (Fig. 5 und 6) können die stromerzeugenden Antriebsregler innerhalb des Antriebssystems Strom an die anderen Antriebsregler liefern, die Strom benötigen. Ist der Stromverbrauch höher, als er von den stromerzeugenden Antriebsreglern geliefert werden kann, kann der Restbetrag über die Versorgungseinheit 17 dem Stromnetz entnommen werden.

Bei einer weiteren (nicht dargestellten) Ausführungsform sind die Versorgungseinheit 17 und wenigstens ein, vorzugsweise alle Antriebsregler 11 an das Stromnetz angeschlossen. Dann können die Antriebsregler 11 selbst den benötigten Strom dem Stromnetz entnehmen bzw. überschüssigen Strom an die anderen Antriebsregier 11 liefern, wenn diese ihn benötigen. Wird mehr Strom erzeugt, als von den Antriebsreglern 11 insgesamt benötigt, dann wird der überschüssige Strom der Versorgungseinheit 17 zugeführt, die ihn speichert. Der gespeicherte Strom steht dann zur Verfügung, um gegebenenfalls wenigstens einen Antriebsregler 11 vollständig oder teilweise mit dem benötigten Strom zu versorgen. Dadurch kann die Stromentnahme aus dem Netz erheblich verringert werden. Die Versorgungseinheit 17 kann so ausgebildet sein, dass sie Strom an das Netz abgibt, wenn ihre Stromaufnahme-Kapazität überschritten wird.

Bei den beschriebenen Ausführungsbeispielen sind die Antriebsregler und, sofern vorhanden, die wenigstens eine Versorgungseinheit 17 an die durchgehenden stromführenden Schienen 2 angeschlossen. Es besteht abweichend hiervon auch die Möglichkeit, die Trägerleitplatten-Module der Antriebsregler 11 durch einzelne Schienenstücke miteinander zu verbinden. Sie sind ausschließlich unter Federkraft gegen die Kontaktflächen 3 der Tragerleitplatten 1 gedrückt. Die hierzu eingesetzten Federelemente haben vorteilhaft die beschriebene Ausbildung als Federklammern 4, wie sie anhand von Fig. 2 beschrieben worden ist. Auch die Schienenstücke haben in diesem Falle einen ausreichend großen Querschnitt, damit innerhalb des Antriebssystems jeder Antriebsregler 11 mit dem maximalen Strom versorgt werden kann, für den er jeweils ausgelegt ist. Diese Schienenstücke haben keine Öffnungen oder Durchbrechungen, so dass hohe Ströme zwischen den Antriebsreglern übertragen werden können. Benötigt beispielsweise ein Antriebsregier innerhalb des Antriebssystems eine Stromaufnahme von beispielsweise 200 A, dann kann diese Strommenge über die einzelnen Schienenstücke problemlos übertragen werden.

Die stromführenden Schienen 2 können auch so ausgebildet sein, dass sie sich nur über einen Teil der nebeneinander angeordneten Antriebsreglern 11 erstrecken. So ist es beispielhaft möglich, bei zehn hintereinander angeordneten Antriebesreglern etwa vier Antriebsregler durch eine stromführende Schiene und die restlichen sechs Antriebsregler durch eine zweite Schiene miteinander zu verbinden.

Schließlich ist es auch möglich, kurze Schienenstücke sowie durchgehende stromführende Schienen innerhalb eines Antriebssystems einzusetzen.

Während bei den beschriebenen Ausführungsbeispielen die Trägerleitplatten 1 Teil eines Moduls sind, an das die Antriebsregler 11 angeschlossen werden, können die Trägerleitplatten 1 auch in die Antriebsregler 11 integriert sein.

## Patentansprüche

1. Antriebssystem mit Antriebsreglern (11), vorzugsweise Umrichtern, die hintereinander in einer Reihe angeordnet und durch Stromführungselemente stromleitend miteinander verbunden sind, welche Teil einer Stromschiene (2) sind, die sich über wenigstens einen Teil der Länge der Reihe von Antriebsreglern (11) erstreckt und an die die Antriebsregler (11) über Federklammern (4) angeschlossen sind, die jeweils zwei Schenkel (7) aufweisen, die über elastische Biegeabschnitte (10) in einen mittleren Abschnitt (9) übergehen,
**dadurch gekennzeichnet, dass** die Stromschiene (2) an einer elektrischen Kontaktierung (3) einer Trägerleitplatte (1) des Antriebsreglers (11) unter der Kraft der Federklammern (4) anliegt, deren mittlerer Abschnitt (9) ein Klemmabschnitt ist, der unter elastischer Vorspannung auf der Stromschiene (2) aufliegt.

2. Antriebssystem nach Anspruch 1,
**dadurch gekennzeichnet, dass** die Stromschiene (2) eckigen, vorzugsweise rechteckigen Querschnitt hat.

3. Antriebssystem nach Anspruch 1 oder 2,
**dadurch gekennzeichnet, dass** die Stromschiene (2) über ihre Länge konstanten Querschnitt hat.

4. Antriebssystem nach einem der Ansprüche 1 bis 3,
**dadurch gekennzeichnet, dass** die Federklammern (4) mit ihren Schenkeln (7) durch Öffnungen in der Trägerleitplatte 1 gesteckt und mit hakenförmigen Enden (5) an der von der Stromschiene (2) abgewandten Unterseite (6) der Trägerleitplatte (1) anliegen.

## Claims

1. A drive system with drive controllers (11), preferably converters, which are arranged consecutively in a row, and are connected with one another by means of current conducting elements, which are part of a current bar (2), which extends over at least a part of the length of the row of drive controllers (11), and to which the drive controllers (11) are connected via spring clamps (4), each of which has two arms (7), which merge via elastic bending sections (10) into a central section (9), **characterised in that** the current bar (2) rests against an electrical contacting (3) of a motherboard (1) of the drive controller (11) under the force of the spring clamps (4), of which the central section (9) is a clamping section, which under an elastic preload is seated on the current bar (2).

2. The drive system according to claim 1, **characterised in that** the current bar (2) has an angular, preferably a rectangular, cross-section.

3. The drive system according to claim 1 or 2, **characterised in that** the current bar (2) has a constant cross-section over its length.

4. The drive system according to one of the claims 1 to 3, **characterised in that** the arms (7) of the spring clamps (4) are inserted through openings in the motherboard (1) and fit with hook-shaped ends (5) against the underside (6) of the motherboard (1) that is facing away from the current bar (2).

## Revendications

1. Système d'entraînement doté de régulateurs d'entraînement (11), de préférence des convertisseurs, lesquels sont disposés en rangée les uns derrière les autres et sont reliés ensemble de manière électroconductrice grâce à des éléments de conduction de courant, lesquels font partie d'une barre conductrice (2) qui s'étend sur au moins une partie de la longueur de la rangée de régulateurs d'entraînement (11) et à laquelle les régulateurs d'entraînement (11) sont raccordés via des agrafes élastiques (4) qui présentent respectivement deux branches (7) qui se transforment via des parties de pliage élastiques (10) en une partie centrale (9), **caractérisé en ce que** la barre conductrice (2) repose contre un contact électrique (3) d'une plaque de support conductrice (1) du régulateur d'entraînement (11) sous l'effet de la force des agrafes élastiques (4) dont la partie centrale (9) est une partie de serrage qui repose sur la barre conductrice (2) sous l'effet d'une précontrainte élastique.

2. Système d'entraînement selon la revendication 1, **caractérisé en ce que** la barre conductrice (2) possède une section transversale angulaire, de préférence rectangulaire.

3. Système d'entraînement selon la revendication 1 ou 2, **caractérisé en ce que** la barre conductrice (2) a une section transversale constante sur sa longueur.

4. Système d'entraînement selon l'une des revendications 1 à 3, **caractérisé en ce que** les agrafes élastiques (4) sont insérées avec leurs branches (7) à travers des ouvertures dans la plaque de support conductrice crochet sur le dessous (6), tournant le dos à la barre conductrice (2), de la plaque de support conductrice (1).
